# EUROPÄISCHE PATENTANMELDUNG

(11) **EP 3 178 641 A1**
(43) Veröffentlichungstag der Anmeldung: **14.06.2017**
(21) Anmeldenummer: 16189807.7
(22) Anmeldetag: 21.09.2016
(51) Int. Cl.: B29D 30/48, F16F 9/04, B29C 45/00, B29C 45/26, B29C 45/56, B29D 22/02, F16F 9/05

(54) **ELASTOMERER GEGENSTAND**

(30) Priorität: 09.12.2015 DE 102015224651
(71) Anmelder: ContiTech Luftfedersysteme GmbH, 30165 Hannover (DE)
(72) Erfinder: Gawinski, Hubertus, 31867 Lauenau (DE); Balachonzew, Boris, 30823 Garbsen (DE); Stahmer, Reinhard, 31535 Neustadt am Rübenberge (DE)
(74) Vertreter: Finger, Karsten

(57) **Zusammenfassung**

Die Erfindung betrifft einen elastomeren Gegenstand mit mindestens zwei Enden, wobei mindestens ein Ende eine Öffnung mit einem Befestigungswulst aufweist, der mit einem Wulstkern verstärkt ist, wobei mindestens ein Wulstkern aus Kunststoff (6) mit eingebetteten Verstärkungsfasern besteht. Der Erfindung liegt die Aufgabe zu Grunde, einen elastomeren Gegenstand zu schaffen, bei dem mindestens ein Wulstkern aus Kunststoff ausgebildet ist, der bei hoher Festigkeit und zu angrenzenden Befestigungsteilen korrespondierender Längenausdehnung einfach herstellbar ist. Diese Aufgabe wird dadurch gelöst, dass der mindestens eine Wulstkern in einem Spritzguss-Verfahren hergestellt wird, wobei der spritzgegossene Wulstkern Verstärkungsfasern umfasst, die mindestens teilweise in Umfangsrichtung des Wulstkernes ausgerichtet sind. Die Aufgabe wird weiterhin dadurch gelöst, dass der Wulstkern durch ein Verfahren mit folgenden Arbeitsschritten hergestellt wird, nämlich
- Einspritzen eines einen Verstärkungsfaseranteil aufweisenden Kunststoffmaterials (6) in ein einen Wulstkern abbildendes Spritzgusswerkzeug (1),
- Einbringen einer rotatorischen Relativbewegung (13) in mindestens einen Teil des Werkzeugs (2, 3, 4, 5) zur Erzeugung einer laminaren Strömung in Umfangsrichtung des Wulstkerns ähnlich einer Couette-Strömung mindestens in Teilen des Kunststoffmaterials.

Durch eine rotatorische Relativbewegung der Werkzeugteile (2, 3, 4, 5) zueinander während des Herstellprozesses werden die Verstärkungsfasern in der Kunststoffmatrix in Umfangsrichtung ausgerichtet, da sich durch die Rotation der mit dem Kunststoff im Kontakt stehenden Werkzeugteile (2, 3, 4, 5) wegen der Reibung zwischen den Kontaktflächen (11, 12) der Werkzeugteile (2, 3, 4, 5) und dem Kunststoff der Kunststoff mit den Fasern in eine laminare Strömung in Umfangsrichtung des Wulstkerns ähnlich einer Couette-Strömung mitreißen lässt. In Folge dessen richtet sich in mindestens einem Übergangsbereich zwischen den Kontaktflächen (11, 12) mindestens ein Teil der Verstärkungsfasern in Umfangsrichtung aus.

## Beschreibung

Die Erfindung betrifft einen elastomeren Gegenstand mit mindestens zwei Enden, wobei mindestens ein Ende eine Öffnung mit einem Befestigungswulst aufweist, der mit einem Wulstkern verstärkt ist, wobei mindestens ein Wulstkern aus Kunststoff mit eingebetteten Verstärkungsfasern besteht. Die Erfindung betrifft außerdem ein Verfahren zur Herstellung eines derartigen Gegenstandes.

Gegenstände der genannten Art sind an sich bekannt und werden beispielsweise in Luftfedern für Nutzfahrzeuge eingesetzt. Der Rollbalg der Luftfeder besteht aus einem elastomeren Material, vorzugsweise Gummi oder einem gummiähnlichen Kunststoff, und weist endseitige Befestigungswülste auf. Diese Befestigungswülste ermöglichen die Montage auf Anschlussteilen, wie Bördelplatten oder Abrollkolben. Die Wulstkerne der Befestigungswülste bestehen üblicherweise aus Stahldrähten.

Es ist bekannt, die Anschlussteile wie Abrollkolben und/oder Deckel bzw. Anschlussplatten aus Stahl, Aluminium oder glasfaserverstärktem Kunststoff herzustellen.

Die Verwendung von Kunststoff für die Anschlussteile hat den Vorteil, dass Korrosion vermieden wird und sich Kosten- und Gewichtsvorteile gegenüber der Verwendung von Stahlteilen ergeben. Nachteilig wurde aber festgestellt, dass sich die Anschlussteile aus Kunststoff und die Befestigungswülste bei hohen bzw. tiefen Betriebstemperaturen in unterschiedlichem Maße ausdehnen und die Baugruppe dadurch undicht wird, weil die Stahldrähte als Verstärkungskerne der Befestigungswülste und die Kunststoffanschlussteile unterschiedliche Ausdehnungsverhalten aufweisen.

Aus der DE 10 2008 055 509 A1 ist es bekannt, die Befestigungswülste eines Rollbalges mit einem eingebetteten Wulstkern aus Kunststoff auszustatten, der im Spritzgussverfahren hergestellt ist. Der Befestigungswulst des einen Rollbalgendes ist konisch ausgebildet und liegt unter der Wirkung des Innendruckes des Rollbalges an der zugeordneten, konusförmigen Sitzfläche des Abrollkolbens dichtend an. Bei Bälgen mit konischen Dichtflächen sorgt der Wulstkern für einen festen Sitz und eine dauerhafte Vorspannung auf dem Konus. Das andere Rollbalgende weist einen bördelfähigen Befestigungswulst auf. Der Rand der abschließenden Bördelplatte wird um diesen Befestigungswulst dicht herumgebördelt.

Durch die Verwendung von Kunststoff für die Wulstkerne wird zwar die von den Stahldrähten als Verstärkungskerne auftretende Ausdehnungsproblematik vermieden, jedoch ist die Belastbarkeit dieser durch Spritzguss hergestellten Kunststoffkerne begrenzt.

In der DE 10 2010 061163A1 ist eine Luftfeder offenbart, deren Balg Befestigungswülste aufweist, die jeweils einen Wulstkern aus einem mehrfach gewickelten, flachen Profilstrang aus faserverstärktem Kunststoff aufweisen.

Daraus ergibt sich zwar eine hohe Festigkeit des Wulstkerns bei gleichzeitig korrespondierender Längenausdehnung wie die der Anschlussteile aus Kunststoff, das Herstellverfahren ist jedoch recht aufwendig.

Der Erfindung liegt die Aufgabe zu Grunde, einen elastomeren Gegenstand der eingangs geschilderten Art zu schaffen, bei dem mindestens ein Wulstkern aus Kunststoff ausgebildet ist, der bei hoher Festigkeit und zu angrenzenden Befestigungsteilen korrespondierender Längenausdehnung einfach herstellbar ist.

Diese Aufgabe wird im Hinblick auf den Gegenstand dadurch gelöst, dass der mindestens eine Wulstkern in einem Spritzguss-Verfahren hergestellt ist, wobei der spritzgegossene Wulstkern Verstärkungsfasern umfasst, die mindestens teilweise in Umfangsrichtung des Wulstkernes ausgerichtet sind.

In einer Weiterbildung der Erfindung ist der elastische Gegenstand ein Luftfederbalg.
In einer Weiterbildung der Erfindung ist der elastische Gegenstand ein Kompensator
In einer Weiterbildung der Erfindung ist der elastische Gegenstand ein Fahrzeugluftreifen.
In einer Weiterbildung der Erfindung sind die Verstärkungsfasern Glasfasern.
In einer Weiterbildung der Erfindung sind die Verstärkungsfasern Kohlefasern.

Das Spritzgießverfahren ist ein einfaches und kostengünstiges Verfahren, die Ausrichtung der Verstärkungsfasern in Umfangsrichtung erhöht die Festigkeit der Kunststoff-Wulstkerne beträchtlich, so dass eine große Vielfalt von Einsatzmöglichkeiten gegeben ist.

Die Aufgabe wird im Hinblick auf das Herstellverfahren dadurch gelöst, dass das Herstellverfahren mindestens folgende Arbeitsschritte aufweist, nämlich
- Einspritzen eines einen Verstärkungsfaseranteil aufweisenden Kunststoffmaterials in ein Spritzgusswerkzeug ,
- Einbringen einer rotatorischen Relativbewegung in mindestens einen Teil des Werkzeugs zur Erzeugung einer laminaren Strömung in Umfangsrichtung des Wulstkerns ähnlich einer Couette-Strömung mindestens in Teilen des Kunststoffmaterials.

Durch eine rotatorische Relativbewegung der Werkzeugteile zueinander während des Herstellprozesses werden die Verstärkungsfasern in der Kunststoffmatrix in Umfangsrichtung ausgerichtet, da sich durch die Rotation des mit dem Kunststoff im Kontakt stehenden Werkzeugteils wegen der Reibung zwischen der Kontaktfläche des Werkzeugteils und dem Kunststoff der Kunststoff mit den Fasern in eine laminare Strömung in Umfangsrichtung des Wulstkerns ähnlich einer Couette-Strömung mitreißen lässt. In Folge dessen richtet sich in mindestens einem Übergangsbereich zwischen den Kontaktflächen mindestens ein Teil der Verstärkungsfasern in Umfangsrichtung aus. Gleichzeitig wird die Ausbildung von Schwachstellen in Form von Bindenähten, wie sie in statischen Werkzeugen im Bereich des Zusammenflusses von Fließfronten auftreten, vermieden. Dadurch ist eine erhebliche Verbesserung der Festigkeit erreichbar.

In einer Weiterbildung der Erfindung weist das Herstellverfahren einen weiteren Arbeitsschritt auf, nämlich
- Rotation von mindestens zwei mit dem Kunststoffmaterial in Kontakt stehenden Werkzeugteilen, wobei die Rotationsrichtung der Werkzeugteile gegenläufig ist.

In einer Weiterbildung der Erfindung weist das Herstellverfahren einen weiteren Arbeitsschritt auf, nämlich,
- Rotation von mindestens zwei mit dem Kunststoffmaterial in Kontakt stehenden Werkzeugteilen gegen mindestens zwei weitere mit dem Kunststoffmaterial in Kontakt stehende Werkzeugteile, wobei die Rotationsrichtung der Werkzeugteile paarweise gegenläufig ist.

Durch eine derartige gegenläufige Rotation ist die Ausrichtung der Verstärkungsfasern in Umfangsrichtung schneller durchführbar, sodass ein größerer Anteil von Verstärkungsfasern vor der Erstarrung des Kunststoffmaterials ausrichtbar ist.

In einer Weiterbildung der Erfindung läuft die gegenläufige Rotation der Werkzeugteile mit unterschiedlicher Rotationsgeschwindigkeit ab.

Durch eine individuelle Einstellung der Drehgeschwindigkeit lässt sich der Faserverlauf der Verstärkungsfasern besonders gut beeinflussen.

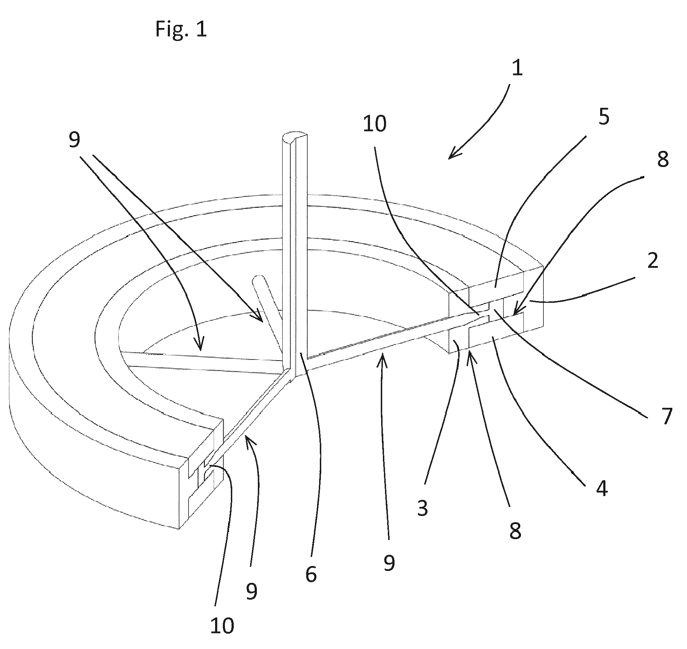

Anhand der Zeichnungen wird nachstehend ein Beispiel der Erfindung näher erläutert.
Es zeigt Figur 1 eine teilausgeschnittene perspektivische Prinzipskizze eines für das erfindungsgemäße Herstellverfahren geeigneten Werkzeugs,
Figur 2 einen Querschnitt des Werkzeuges und
Figur 3 einen Geschwindigkeitsverlauf des Kunststoffmaterials während der Rotation von Werkzeugteilen.

Das in der Figur 1 gezeigte Spritzgusswerkzeug 1 weist kreisringförmige Segmente 2, 3, 4 und 5 auf. Die Segmente 2 und 3 bilden eine radiale Begrenzung einer zum Einspritzen von Kunststoffmaterial 6 vorgesehenen Kavität 7, wobei das Segment 2 die äußere und das Segment 3 die innere Begrenzung bilden. Das Kunststoffmaterial 6 weist einen vorbestimmten, hier nicht gezeigten Anteil an Glasfasern auf.

Orthogonal zu den Segmenten 2 und 3 sind die axialen Begrenzungen der Kavität 7 durch die Segmente 4 und 5 gebildet.

Die Segmente 2 - 5 greifen derart ineinander, dass in den Berührungsflächen 8 der Segmente eine Relativbewegung der Segmente 2 - 5 zueinander möglich ist, jedoch bei einem Einspritzen des Kunststoffes 6 kein Material aus der Kavität 7 austreten kann.

Das Kunststoffmaterial 6 ist über eine Mehrzahl von Spritzkanälen 9 in die Kavität 7 einspritzbar, wobei die eigentlichen Einspritzdüsen 10 hier Bestandteil des inneren radialen Segmentes 3 sind.

In einem ersten Arbeitsschritt wird der Kunststoff 6 durch die Kanäle 9 und die Düsen 10 in die Kavität eingespritzt. In einem weiteren Arbeitsschritt werden die Segmente 2 und 3, alternativ die Segmente 4 und 5, gegeneinander in Rotation versetzt. Es ist auch möglich, alle vier Segmente 2, 3, 4 und 5 in Rotation zu versetzen, wobei die Drehrichtung der jeweils gegenüberliegenden Segmentpaare 2 und 3 sowie 4 und 5 untereinander gleichgerichtet und dem jeweils anderen Segmentpaar jedoch entgegengerichtet sein kann.

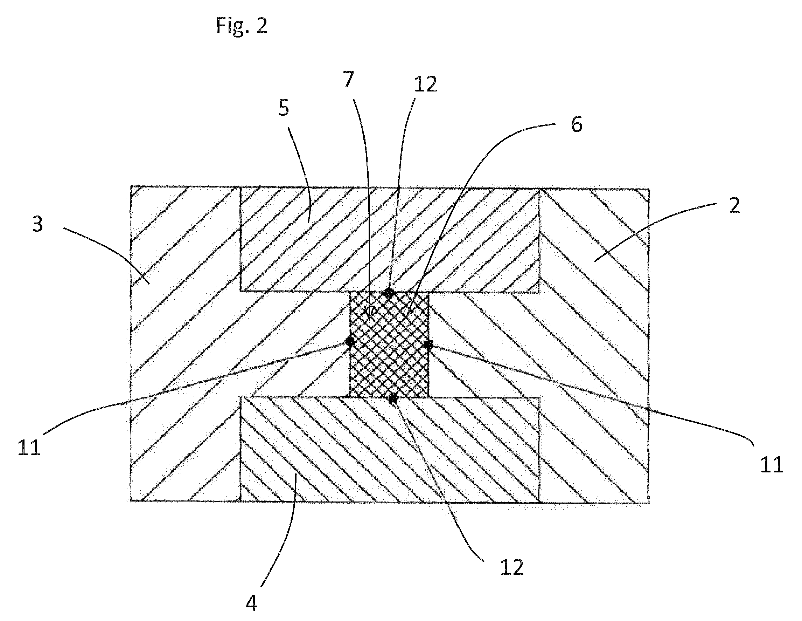

In der Figur 2 ist in einem Querschnitt des Werkzeugs 1 die Lage der Segmente 2 - 5 gegenüber der Kavität 7 noch einmal verdeutlicht. An den Kontaktflächen 11 stehen die radialen Segmente 2 und 3 mit dem eingespritzten Kunststoff in Kontakt, an den Kontaktflächen 12 betrifft dies die axialen Segmente 4 und 5.

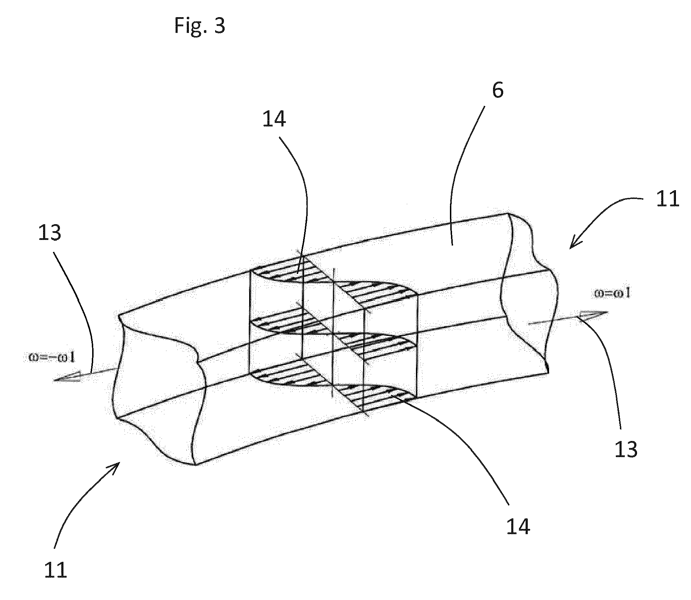

In der Figur 3 ist gezeigt, wie sich die Rotation der in dieser Figur nicht gezeigten Werkzeugsegmente auf die Fließrichtung und Geschwindigkeit des eingespritzten Kunststoffmaterials 6 auswirkt. In diesem Beispiel wird davon ausgegangen, dass die radialen Segmente (2 und 3 aus Figur 1 oder 2) relativ zueinander mit einer Geschwindigkeit ω rotieren, die anderen Segmente (4 und 5 aus Figur 1 oder 2) feststehen. Die Drehung 13 der Segmente überträgt sich über die Kontaktflächen 11 auf das Kunststoffmaterial 6. Dadurch entsteht ein Profil 14 der Relativgeschwindigkeit des Kunststoffmaterials 6, wobei die Geschwindigkeit des Kunststoffes 6 hier qualitativ durch Pfeile repräsentiert ist.

Etwa in der Mitte des Kunststoffs 6 ist die Relativgeschwindigkeit gleich Null. Das Geschwindigkeitsprofil 14 bewirkt, das sich die hier nicht gezeigten Glasfasern im Kunststoff 6 parallel zur Drehrichtung ausrichten.

### Bezugszeichenliste

### (Teil der Beschreibung)

- 1: Spritzgusswerkzeug
- 2, 3, 4, 5: Segmente des Spritzgusswerkzeugs 1
- 6: Kunststoffmaterial
- 7: Kavität im Werkzeug 1
- 8: Berührungsflächen der Segmente 2, 3, 4, 5 gegeneinander
- 9: Spritzkanäle
- 10: Einspritzdüsen
- 11, 12: Kontaktflächen der Segmente 2-5 mit dem Kunststoff 6
- 13: Drehung der Segmente 2, 3, 4, 5
- 14: Geschwindigkeitsprofil

## Patentansprüche

1. Elastomerer Gegenstand mit mindestens zwei Enden, wobei mindestens ein Ende eine Öffnung mit einem Befestigungswulst aufweist, der mit einem Wulstkern verstärkt ist, wobei mindestens ein Wulstkern aus Kunststoff (6) mit eingebetteten Verstärkungsfasern besteht, **dadurch gekennzeichnet, dass** der mindestens eine Wulstkern in einem Spritzguss-Verfahren hergestellt ist, wobei der spritzgegossene Wulstkern Verstärkungsfasern umfasst, die mindestens teilweise in Umfangsrichtung des Wulstkernes ausgerichtet sind.

2. Elastomerer Gegenstand nach Anspruch 1, **dadurch gekennzeichnet, dass** der elastische Gegenstand ein Luftfederbalg ist.

3. Elastomerer Gegenstand nach Anspruch 1, **dadurch gekennzeichnet, dass** der elastische Gegenstand ein Kompensator ist.

4. Elastomerer Gegenstand nach Anspruch 1, **dadurch gekennzeichnet, dass** der elastische Gegenstand ein Fahrzeugluftreifen ist.

5. Elastomerer Gegenstand nach einem der Ansprüche 1-4, **dadurch gekennzeichnet, dass** die Verstärkungsfasern Glasfasern sind.

6. Elastomerer Gegenstand nach einem der Ansprüche 1-4, **dadurch gekennzeichnet, dass** die Verstärkungsfasern Kohlefasern sind.

7. Verfahren zur Herstellung eines elastomeren Gegenstandes nach mindestens einem der Ansprüche 1-6, **dadurch gekennzeichnet, dass** das Herstellverfahren mindestens folgende Arbeitsschritte aufweist, nämlich
- Einspritzen eines einen Verstärkungsfaseranteil aufweisenden Kunststoffmaterials (6) in ein einen Wulstkern abbildendes Spritzgusswerkzeug (1),
- Einbringen einer rotatorischen Relativbewegung (13) in mindestens einen Teil des Werkzeugs (2, 3, 4, 5) zur Erzeugung einer laminaren Strömung in Umfangsrichtung des Wulstkerns ähnlich einer Couette-Strömung mindestens in Teilen des Kunststoffmaterials.

8. Verfahren nach Anspruch 7, **dadurch gekennzeichnet, dass** die laminare Strömung in Umfangsrichtung des Wulstkerns ähnlich einer Couette-Strömung durch Rotation (13) mindestens eines mit dem Kunststoffmaterial (6) in Kontakt (11, 12) stehenden Werkzeugteils (2, 3, 4, 5) gegenüber weiteren, feststehenden Werkzeugteilen (2, 3, 4, 5) beim Einspritzen des Kunststoffmaterials (6) erzeugbar ist.

9. Verfahren nach Anspruch 8, **gekennzeichnet durch** einen weiteren Arbeitsschritt, nämlich
- Rotation (13) von mindestens zwei mit dem Kunststoffmaterial (6) in Kontakt (11, 12) stehenden Werkzeugteilen (2, 3, 4, 5), wobei die Rotationsrichtung (13) der Werkzeugteile (2, 3, 4, 5) gegenläufig zueinander ist.

10. Verfahren nach Anspruch 7, **gekennzeichnet durch** einen weiteren Arbeitsschritt, nämlich
- Rotation (13) von mindestens zwei mit dem Kunststoffmaterial (6) in Kontakt (11, 12) stehenden Werkzeugteilen (2, 3, 4, 5) gegen mindestens zwei weitere mit dem Kunststoffmaterial (6) in Kontakt (11,12) stehende Werkzeugteile (2, 3, 4, 5), wobei die Rotationsrichtung (13) der Werkzeugteile (2, 3, 4, 5) paarweise gegenläufig zueinander ist.

11. Verfahren nach Anspruch 9 oder 10, **dadurch gekennzeichnet, dass** die gegenläufige Rotation (13) der Werkzeugteile (2, 3, 4, 5) mit unterschiedlicher Rotationsgeschwindigkeit abläuft.
